Europäisches Patentamt

**European Patent Office**

**Office européen des brevets**

(19)

(11) Veröffentlichungsnummer : **0 151 436 B1**

(12) **EUROPÄISCHE PATENTSCHRIFT**

(45) Veröffentlichungstag der Patentschrift :
28.09.88

(51) Int. Cl.⁴ : **B 60 H   3/06**, B 60 H   1/32

(21) Anmeldenummer : 85100706.2

(22) Anmeldetag : 24.01.85

(54) Vorrichtung zum Klimatisieren von Räumen.

(30) Priorität : 26.01.84 DE 3402618

(43) Veröffentlichungstag der Anmeldung :
14.08.85 Patentblatt 85/33

(45) Bekanntmachung des Hinweises auf die Patenterteilung : 28.09.88 Patentblatt 88/39

(84) Benannte Vertragsstaaten :
DE FR GB IT

(56) Entgegenhaltungen :
DE-A- 2 601 127
DE-A- 2 831 129
US-A- 2 441 852
US-A- 4 365 541

(73) Patentinhaber : Krupp MaK Maschinenbau GmbH
Falckensteiner Strasse 2-4
D-2300 Kiel 17 (DE)

(72) Erfinder : Nakonzer, Klaus, Dipl.-Ing.
Kirschenweg 31
D-2308 Preetz (DE)
Erfinder : Lenz, Olaf, Dipl.-Ing.
Grosser Eiderkamp 36
D-2300 Kiel 1 (DE)
Erfinder : Schneider, Dieter
Steenredder 62
D-2303 Gettorf (DE)

(74) Vertreter : Hansmann, Dierk, Dipl.-Ing.
Jessenstrasse 4
D-2000 Hamburg 50 (DE)

### Beschreibung

Die Erfindung bezieht sich auf eine Vorrichtung zum Klimatisieren von Räumen, insbesondere von Fahrzeuginnenräumen, mit Zuluft aus einer verschmutzten bzw. kontaminierten Umgebungsluft unter Verwendung von Klimageräten mit Luft als Kühlmedium.

Anordnungen dieser Art sind an sich bekannt und lassen eine besonders kompakte Bauform zu, wenn zur Komprimierung und Expansion der Luft Turbomaschinen verwendet werden. Die zum Antrieb erforderlich komprimierte Luft wird dabei durch eine kleine Gasturbine mit Druckluftanzapfung geliefert.

Bei derartigen Verfahren wird in der Regel die expandierte kalte Luft direkt in den zu kühlenden Raum eingeblasen und eine entsprechende Menge Raumluft entweicht ins Freie.

Unterliegt der Raum jedoch besonderen Bedingungen hinsichtlich der Luftsauberkeit oder ist die Umgebung, aus der die Verfahrensluft angesaugt wird, kontaminiert, erfordert die Direkteinblasung von Kühlluft erheblichen Aufwand an die Luftfilterung und Luftdekontaminierung.

Die Aufgabe der Erfindung besteht darin, eine gattungsgemäße Vorrichtung unter Verwendung von Reinraumluft mit geringem Aufwand für die Luftfilterung und Luftdekontaminierung zu schaffen, um auch den Einsatz bei beweglichen Anordnungen ökonomisch zu gewährleisten.

Die Lösung dieser Aufgabe erfolgt erfindungsgemäß dadurch, daß Umgebungsluft über einen Filter zur Bildung von Reinraumluft direkt zuführbar und die Reinraumluft über einen parallel zugeordneten Wärmetauscher klimatisierbar ist, der von einer Kälteanlage mit getrennter Prozeßluft versorgbar ist.

Hierdurch ist es möglich, daß die Verfahrensluft nicht in den zu klimatisierenden Raum eingeblasen, sondern über den Wärmetauscher sekundärseitig die Raumluft im Umluftverfahren klimatisiert wird. Die Prozeßluft hat damit einen getrennten Kreislauf, so daß die Prozeßluft somit nicht den hohen Anforderungen der Raumluft entsprechen muß.

Eine wirtschaftliche Ausbildung wird erfindungsgemäß dadurch geschaffen, daß die Prozeßluft nach dem Durchströmen des Wärmetauschers der kälteanlage wieder zuführbar ist.

Eine weitere Verbesserung ist dadurch möglich, daß die Prozeßluft nach dem Durchströmen des Wärmetauschers vor dem Kühlgebläse der Kälteanlage einspeisbar ist.

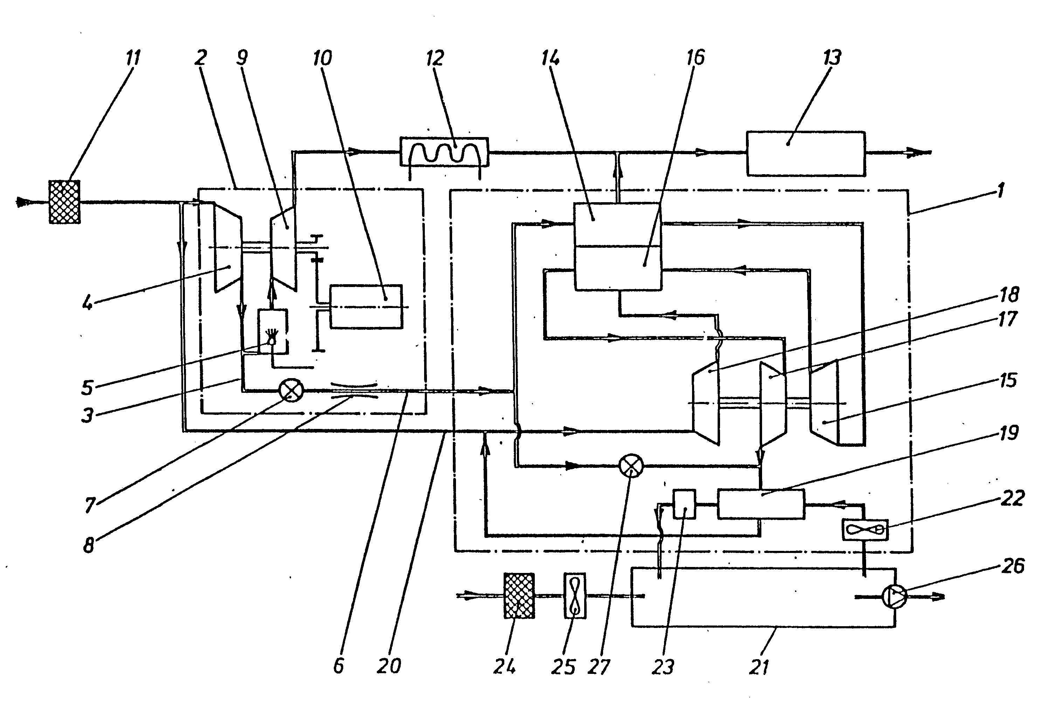

In der Zeichnung ist ein Ausführungsbeispiel einer Klimaanlage schematisch dargestellt.

Es wird hierbei eine Luftexpansions-Kälteanlage 1 von einer Gasturbine 2 mit einer Druckluft-Anzapfung 3 nach einem Verdichter 4 und vor einer Brennkammer 5 über eine Leitung 6 mit eingebautem Anzapfventil 7 und Luftstrombegrenzer 8 angetrieben.

Dabei treibt einerseits eine Turbine 9 den Verdichter 4 und andererseits weitere Verbraucher, wie einen Strom-Generator 10, an. Die Brennluft und Anzapfluft wird über einen Filter 11 angesaugt und die Abgase entweichen über einen Wärmetauscher 12 und einen Schalldämpfer 13 ins Freie.

Der Wärmetauscher 12 dient beispielsweise zur Vorwärmung anderer Aggregate, wie einem Haupttriebwerk des Fahrzeuges.

Die komprimierte und erhitzte Anzapfluft durchströmt im Kühlbetrieb zunächst einen Kühler 14, dann einen Verdichter 15 und einen Kühler 16. Anschließend wird die Anzapfluft in einer Turbine 17 expandiert sowie abgekühlt und gleichzeitig zum Antrieb des Verdichters 15 und eines Gebläses 18 herangezogen.

Die Anzapfluft durchströmt einen Wärmetauscher 19 für die Klimatisieren eines Reinluft-Raumes 21 und wird anschließend dem Prozeß wieder zugeführt. Bei dieser Lösung, bei der die Luft auf der Saugseite des Gebläses 18 der Kühlluft beigemischt ist, wird die Kühlluft durch eine Leitung 20 über das Filter 11 angesaugt. Diese dient der Wärmeabfuhr aus den beiden Kühlern 14 und 16 und wird anschließend den Abgasen der Turbine 9 zugemischt, um deren Austrittstemperatur zu senken.

Die Kühlung des Rein-Raumes 21 erfolgt durch Umwälzen von Raumluft mit Hilfe eines Gebläses 22 durch den Wärmetauscher 19 und eines Wasserabscheiders 23. Die Frischluftzufuhr erfolgt über einen Filter 24 mit Hilfe eines Ventilators 25 und die Abluft entweicht durch eine Luftschleuse 26.

Bei Heizbetrieb wird die komprimierte und erwärmte Anzapfluft in Leitung 6 unter Umgehung der Expansionskälteanlage über ein Drosselventil 27 direkt in den Wärmetauscher 19 eingeblasen.

Das vorgeschlagene Verfahren erlaubt es, die für Rein-Räume besonders kritische Filteranlage 24 dem im Vergleich zur Kühlluftmenge wesentlich kleineren Frischluftdurchsatz anzupassen. Es erlaubt aber auch eine Reduzierung der Größe des Prozeßfilters 11.

Die Trennung des Reinluftbereiches von der Prozeßluft bedeutet darüber hinaus eine erhöhte Sicherheit gegen Kontaminierung.

Die Untergliederung der Gesamtanlage in die in sich geschlossenen Teile Kälteanlage 1, Antriebsanlage 2 und Rein-Raum 21 mit einfachen Schnittstellen erlaubt schließlich eine standardisierte Bauweise bei erleichterter Anpassung an unterschiedliche Anwendungsfälle.

### Patentansprüche

1. Vorrichtung zum Klimatisieren von Räumen (21), insbesondere von Fahrzeuginnenräumen, mit Zuluft aus einer verschmutzten bzw. kontaminierten Umluft unter Verwendung von Klimageräten mit Luft als Kühlmedium, dadurch gekennzeichnet, daß Umgebungsluft über einen Filter (24) zur Bildung von Reinraumluft direkt zuführbar und die Reinraumluft über einen parallel zugeordneten Wärmetauscher (19) klimatisierbar ist, der von einer Kälteanlage (1) mit getrennter Prozeßluft versorgbar ist.

2. Vorrichtung nach Anspruch 1, dadurch gekennzeichnet, daß die Prozeßluft nach dem Durchströmen des Wärmetauschers (19) der Kälteanlage (1) wieder zuführbar ist.

3. Vorrichtung nach Anspruch 1 und 2, dadurch gekennzeichnet, daß die Prozeßluft nach dem Durchströmen des Wärmetauschers (19) vor dem Kühlgebläse (18) der Kälteanlage (1) einspeisbar ist.

**Claims**

1. Apparatus for air-conditioning interiors (21), in particular vehicle interiors, the inlet air being polluted or contaminated circulating air and using air-conditioning apparatus having air as the cooling medium, characterised in that ambient air can be fed directly via a filter (24) to provide purified interior air and the purified interior air can be air-conditioned via a heat exchanger (19) arranged in parallel and which can be provided with cooling apparatus (1) having separate process air.

2. Apparatus according to claim 1, characterised in that the process air can be re-fed to the cooling apparatus (1) after it has flowed through the heat exchanger (19).

3. Apparatus according to claims 1 and 2, characterised in that the process air can be fed to the cooling apparatus (1) upstream of the fan (18) after it has flowed through the heat exchanger (19).

**Revendications**

1. Dispositif de climatisation d'espaces (21), en particulier de climatisation d'intérieurs de véhicules, au moyen d'air amenée pris d'un air environnant encrassé ou contaminé, des appareils de climatisation utilisant de l'air comme agent de refroidissement étant à cette fin employés, le dispositif étant caractérisé en ce que de l'air environnant, passant par un filtre (24), peut être amené directement pour la formation d'air de local épuré et en ce que l'air de local épuré peut être climatisé à l'intervention d'un échangeur de chaleur (19) monté en parallèle, qui peut être alimenté en air de traitement séparé, par une installation de refroidissement (1).

2. Dispositif suivant la revendication 1, caractérisé en ce que l'air de traitement, après son passage par l'échangeur de chaleur (19), peut être ramené à l'installation de refroidissement (1).

3. Dispositif suivant les revendications 1 et 2, caractérisé en ce que l'air de traitement peut arriver après son passage par l'échangeur de chaleur (19) en amont de la soufflante de refroidissement (18) de l'installation de refroidissement (1).

0 151 436